# FASCICULE DE BREVET EUROPEEN

(11) **EP 0 612 058 B1**
(45) Date de publication et mention de la délivrance du brevet: **07.04.1999**
(21) Numéro de dépôt: 94400332.6
(22) Date de dépôt: 15.02.1994
(51) Int. Cl.: G10K 11/16

(54) **Procédé et dispositif d'amortissement actif de vibrations**
Verfahren und Vorrichtung zur aktiven Dämpfung von Schwingungen
Method and device for active damping of vibrations

(30) Priorité: 18.02.1993 FR 9301850
(43) Date de publication de la demande: 24.08.1994
(73) Titulaire: MATRA CAP SYSTEMES, 78140 Velizy-Villacoublay (FR)
(72) Inventeur: Billoud, Guy, 78990 Elancourt (FR)
(74) Mandataire: Fort, Jacques

(56) Documents cités:
- EP-A- 0 425 352
- GB-A- 2 257 327

## Description

L'invention concerne les procédés et dispositifs dits d'amortissement actif de vibrations, destinés à réduire et si possible à annuler l'amplitude des vibrations d'un organe mécanique ou d'un milieu.

Le terme "vibrations" doit être interprété dans un sens général et comme définissant des phénomènes périodiques ou aléatoires de nature et d'origine très diverses, tels que la vibration d'un organe mécanique ou la vibration d'un fluide sous forme d'ondes sonores à propagation libre ou guidée, dans une plage de fréquences quelconque.

On connaît déjà un procédé et un dispositif d'amortissement actif de vibrations en au moins un emplacement déterminé soumis à un champ primaire de vibrations, suivant le préambule de la revendication 1 ou 5.

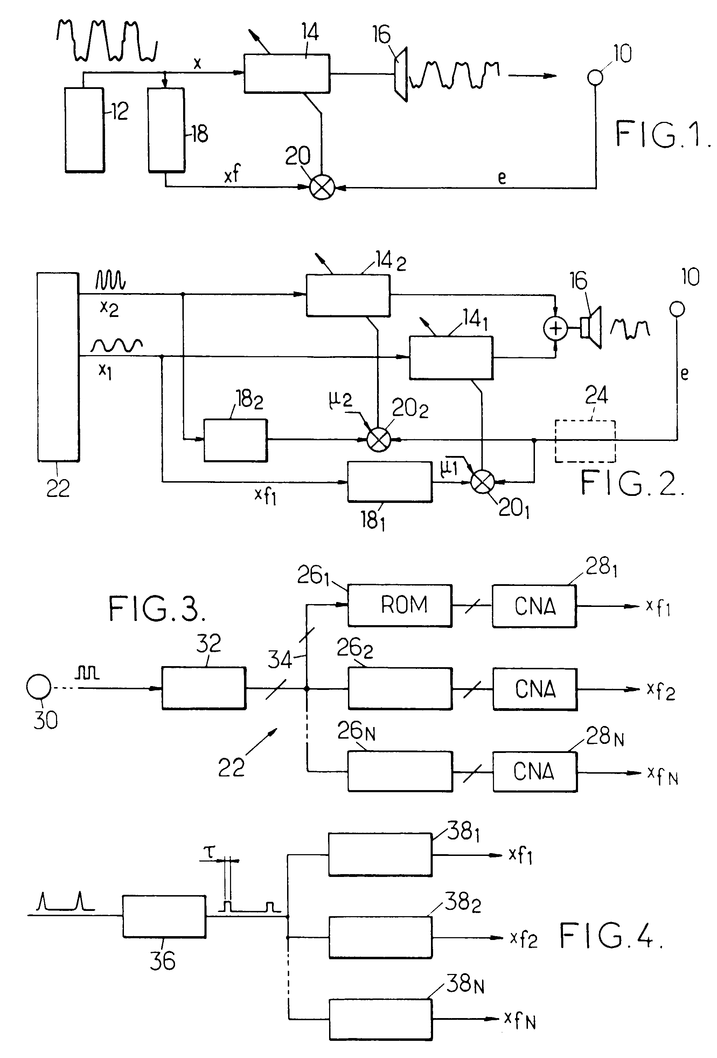

La figure 1 montre, à titre d'exemple, une constitution classique d'un tel dispositif, destiné à réduire un bruit d'origine quelconque, mais dont l'énergie est concentrée à des fréquences harmoniques, à un emplacement déterminé. Le dispositif comporte généralement un capteur 10 de type microphonique placé à l'emplacement à protéger, un générateur 12 d'un signal de référence x contenant toutes les fréquences harmoniques auxquelles le bruit à amortir présente une énergie notable, un filtre numérique 14 recevant le signal de référence et une source 16 d'ondes vibratoires destinées à interférer avec le champ primaire de bruit, alimentée par le filtre 14. Dans ce cas la source 16 est généralement constituée par un haut-parleur fournissant un "contre-bruit".

Le filtre est généralement un filtre numérique à échantillonnage synchrone et comporte en conséquence un convertisseur analogique-numérique de sortie. Il est adaptatif en fonction d'un signal d'erreur e représentant, en amplitude et en phase, le bruit résiduel recueilli par le capteur 10. En général, pur des raisons de simplicité, l'adaptation s'effectue par l'algorithme du gradient. Les coefficients du filtre 14 sont ajustés en permanence par corrélation entre le signal d'erreur e fourni par le capteur 10 et le signal x, obtenu par traitement du signal de référence x par un filtre de boucle 18 ayant une fonction de transfert représentative de la fonction de transfert physique entre la source 16 et le capteur 10 pour chacune des fréquences harmoniques à traiter.

On connaît (GB-A-2 257 327) un dispositif du genre ci-dessus, permettant de supprimer un bruit aléatoire occupant une large bande de fréquence, suivant lequel on fractionne un signal de référence prélevé à proximité de la source de vibration en plusieurs bandes adjacentes, et on filtre numériquement chacune des composantes avant de faire la somme des signaux filtrés.

On connaît également (EP-A-0 425 352) un dispositif d'amortissement du genre ci-dessus défini, permettant d'atténuer des vibrations apparaissant à des fréquences identifiables, dans lequel on soumet les signaux provenant de capteurs à une détection synchrone analogique à l'aide de signaux de référence correspondant aux différentes fréquences de concentration d'énergie.

Dans beaucoup de cas, les fréquences à traiter sont des multiples d'une fréquence fondamentale 1/T₀ du signal de référence. Ce cas est en particulier celui du bruit généré par un arbre tournant, où la fréquence fondamentale présente une relation linéaire avec la vitesse de rotation. Les fréquences harmoniques sont alors de la forme n/T₀ où n est un nombre entier quelconque positif. Dans la pratique il suffit dans la plupart des cas d'assurer l'atténuation pour quelques valeurs de n, correspondant aux fréquences auxquelles l'énergie du champ vibratoire primaire à amortir est concentrée.

La rapidité de convergence de l'algorithme du gradient dépend :
- des matrices d'autocorrélation du signal de référence filtré x_{f},
- du coefficient de convergence (pas d'itération) choisi pour l'algorithme d'adaptation des coefficients du filtre numérique.

Lorsque le nombre de fréquences n/T₀ à prendre en compte (c'est-à-dire lorsque le nombre des pics d'énergie) est élevé, les matrices d'autocorrélation sont telles que la convergence peut devenir très lente.

La présente invention vise notamment à fournir un procédé et un dispositif répondant mieux que ceux antérieurement connus aux exigences de la pratique chaque fois que plusieurs fréquences sont à prendre en considération pour assurer un amortissement suffisant des vibrations. Elle vise notamment à minimiser le temps de convergence dans ce cas.

Pour cela, l'invention propose notamment un procédé suivant la revendication 1.

On voit qu'on distribue les fréquences discrètes, généralement harmoniques, entre plusieurs voies de traitement indépendantes. Grâce à l'utilisation d'autant de filtrages adaptatifs individualisés que de fréquences à traiter, on dispose de coefficients de convergence adaptables indépendamment, au plus un par fréquence à traiter. On peut en conséquence accélérer la convergence de l'algorithme. Pour chaque voie, le coefficient de convergence µ optimal pourra être optimisé en ligne grâce à une normalisation par l'inverse de la trace de la matrice d'autocorrélation des signaux filtrés, respectivement x_{1f}, x_{2f},... x_{nf} correspondant aux différentes fréquences.

Le nombre d'échantillons nécessaire pour représenter les signaux individuels de référence est beaucoup plus faible que celui nécessaire pour représenter un signal de référence non-filtré complexe, ce qui fait que chaque voie est beaucoup plus simple que celle nécessaire dans un dispositif de l'art antérieur.

Dans les dispositifs de l'art antérieur, le filtre numérique unique est généralement à échantillonnage synchrone du signal de référence. Dans un mode avantageux de réalisation de l'invention, le filtrage numérique est effectué sans recherche de synchronisme, à une fréquence d'échantillonnage choisie de façon à augmenter encore la rapidité de convergence des algorithmes.

L'invention propose également un dispositif permettant de mettre en oeuvre le procédé ci-dessus, suivant la revendication 5.

Les différentes voies des dispositifs peuvent être constituées d'éléments discrets qui leur sont propres. Mais les filtres peuvent également être réalisés par programmation d'un calculateur ou par un circuit intégré d'application spécifique, dit ASIC.

On peut considérer que le procédé et le dispositif suivant l'invention sont à algorithme distribué permettant une convergence plus rapide, notamment dans le cas d'un système complexe.

L'invention sera mieux comprise à la lecture de la description qui suit de modes particuliers de réalisation, donnés à titre d'exemples non-limitatifs. La description se réfère aux dessins qui l'accompagnent, dans lesquels :
- la figure 1, déjà mentionnée, est un schéma synoptique de principe d'un dispositif suivant l'art antérieur ;
- la figure 2 est un schéma synoptique montrant la constitution de principe d'un dispositif suivant un premier mode de réalisation, deux voies seulement étant représentées ;
- les figures 3 et 4 sont des schémas synoptiques de modes possibles de génération des signaux de référence utilisés dans le dispositif de la figure 2 ;
- la figure 5, similaire à la figure 2, est un schéma synoptique de dispositif d'amortissement utilisant plusieurs capteurs et plusieurs actionneurs d'amortissement ;
- la figure 6 est un schéma montrant une répartition possible des fonctions du dispositif de la figure 5 ;
- la figure 7 montre une constitution possible d'un des blocs de la figure 6 ; et
- la figure 8, similaire à la figure 3, montre un mode possible de génération de signaux de référence dans le cas de vibrations à des fréquences variant de façon aléatoire.

On décrira maintenant diverses constitutions possibles de dispositifs suivant l'invention, en supposant tout d'abord que les vibrations à traiter ont un caractère périodique, avec une concentration d'énergie à des fréquences fixes ou variant lentement dans le temps, puis dans le cas de fréquences aléatoires.

### Dispositif d'amortissement de vibrations périodiques

Le dispositif dont la constitution de principe est montrée en figure 2 comporte un bloc 22 destiné à fournir les signaux individuels de référence x₁ (à fréquence 1/T₀), x₂ (à fréquence 2/T₀), etc à des voies de traitement respectives. Chaque voie comporte un filtre numérique propre adaptatif par l'algorithme du gradient avec un pas d'incrémentation ou coefficient de convergence adapté. Par exemple la première voie comporte un filtre numérique 14₁ dont les coefficients sont adaptés à partir du signal individuel de référence x_{f1}, du signal d'erreur e et du coefficient de convergence µ₁. Les coefficients du filtre numérique sont ajustés par un multiplieur 20₁ : en effet, le produit direct des valeurs e et x constitue un estimateur non biaisé de la corrélation.

Dans la mesure où le bloc 22 effectue une synthèse synchrone, il suffit de deux échantillons par période dans les filtres 14₁, 14₂, etc. Si la fréquence fondamentale 1/T₀ est stable ou n'évolue que dans une plage limitée, il suffira également de deux points d'échantillonnage, donc de deux coefficients, dans les filtres 18₁, 18₂, etc. En revanche, un nombre de points plus élevé, suffisant pour couvrir toute la plage possible de variations, sera nécessaire en cas de manque de stabilité de la période T₀.

Plutôt que d'affecter un convertisseur analogique-numérique à chaque multiplieur 20, il est avantageux de placer un seul convertisseur 28 à la sortie du capteur 10.

Un dispositif du genre montré en figure 2 est utilisable en générant les signaux individuels de référence x₁, x₂, dans le bloc 22 à partir d'un signal provenant d'un capteur 30 placé dans le voisinage de l'emplacement à protéger, donc sensible au champ primaire. Dans le cas par exemple où la source de bruit est une structure tournante, ce capteur peut être prévu pour fournir un signal carré à fréquence proportionnelle à la vitesse de rotation. Un tel capteur peut notamment comporter une couronne dentée portée par la structure tournante, dont les dents passent devant un capteur magnétique. Le bloc 22 peut alors être constitué par un synthétiseur de forme d'onde.

La figure 3 montre un exemple de réalisation d'un tel synthétiseur, utilisable lorsque le capteur fournit, pour chaque période fondamentale T₀, un nombre d'impulsions supérieur à deux fois l'ordre de l'harmonique le plus élevé à traiter, c'est-à-dire au moins 2N impulsions par période fondamentale T₀ si l'ordre le plus élevé est N. Il comprend, pour chaque voie, une mémoire 26₁, 26₂, ..., 26_{N} contenant les échantillons numériques des signaux sinusoïdaux à générer. Le bus de données de la mémoire est relié à un convertisseur numérique-analogique, par exemple 28₁, qui génère le signal analogique à transmettre au filtre correspondant, par exemple 14₁. Les impulsions successives provenant du capteur 30 placé au voisinage de l'emplacement à protéger incrémentent un compteur 32 dont la sortie attaque le bus d'adresses 34 de toutes les mémoires 26₁, ..., 26_{N} à la fois. Ces mémoires fournissent en sortie les signaux de référence pour les harmoniques 1, 2, ... N.

Dans une variante de réalisation (non représentée), le bus de données de la mémoire est relié directement aux filtres correspondants, par exemple 14₁ et 18₁. Dans ce cas la fréquence de ré-actualisation du signal de référence doit être très élevée (au moins dix fois plus élevée) que la fréquence d'acquisition des signaux pour la mise en oeuvre de l'algorithme afin d'éviter un phénomène de repliement.

Il n'est pas toujours possible d'obtenir un signal de référence à fréquence très élevée à partir d'un capteur sensible aux vibrations à atténuer, par exemple parce que le capteur ne peut fournir qu'un faible nombre d'impulsions par période fondamentale.

Une première solution, si le capteur ne fournit qu'un nombre faible d'impulsions par tour (c'est-à-dire un nombre faible d'impulsions par période fondamentale) consiste à le faire suivre d'un multiplicateur de fréquence.

Une autre solution consiste à remplacer le dispositif montré en figure 3 par celui de la figure 4, qui correspond au cas où le signal de synchronisation disponible est constitué par une impulsion par période fondamentale T₀.

Les impulsions fournies par le capteur sont transformées, par un circuit de mise en forme 36, en impulsions carrées répétées à la fréquence fondamentale T₀, chaque impulsion ayant une même durée τ choisie de façon que le signal présente une énergie suffisante pour chacun des harmoniques à traiter. Le signal obtenu est appliqué à une série de voies constituées chacune par un filtre passe-bande 38₁, 38₂, ..., 38_{N} à bande passante très étroite, de façon que chaque filtre isole l'harmonique à prendre en compte par le filtre numérique correspondant. On peut notamment utiliser des filtres passe-bande actifs d'ordre élevé ou des filtres de type hétérodyne.

Le signal présentant une seule impulsion par période fondamentale peut avoir des origines très diverses.

Dans le cas de l'amortissement des vibrations d'une structure ou d'un bruit généré par une structure tournante (arbre d'une machine, roue d'un ventilateur, arbre d'une hélice, arbre d'un turbo-réacteur, arbre à came d'une voiture, etc), il peut provenir d'un capteur, par exemple optique ou magnéto-résistif, coopérant avec un repère porté par la structure tournante.

Dans d'autres cas la période fondamentale des vibrations n'est pas liée à une grandeur physique directement mesurable, mais est présente dans un signal observable. Cette situation se rencontre par exemple lorsque le procédé a pour but d'atténuer le bruit émis par un mécanisme présentant des vibrations mécaniques directement mesurables à l'aide d'un détecteur qui fournit un signal complexe contenant notamment la période fondamentale. Dans ce cas un signal de synchronisation ayant une impulsion de durée τ par période fondamentale peut être obtenu en soumettant le signal physique provenant du détecteur d'abord à un filtrage passe-bas dont la fréquence de coupure écarte tous les harmoniques d'ordre supérieur à 1 ainsi que de potentielles fréquences perturbatrices, puis à un traitement dans un circuit de saturation, de seuillage et de remise en forme.

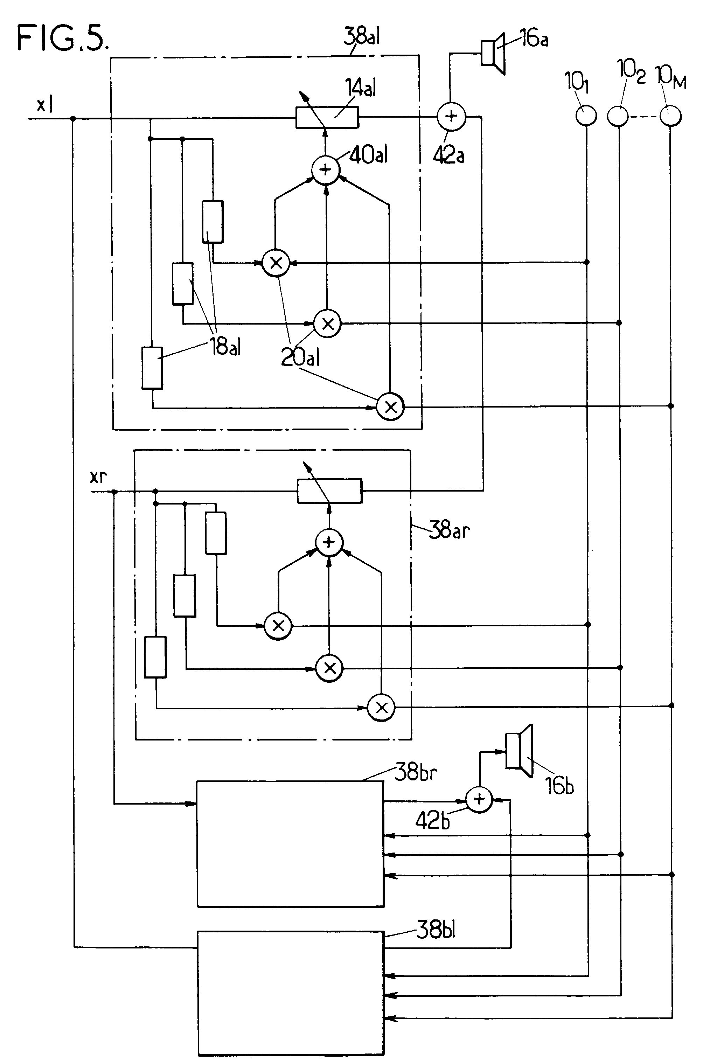

Le dispositif dont la constitution de principe est montrée en figure 2 peut être généralisé au cas d'une installation de plusieurs capteurs placés à des emplacements différents où les vibrations doivent être simultanément atténuées et de plusieurs actionneurs. Un tel dispositif peut être utilisé pour atténuer les bruits en plusieurs emplacements ou pour amortir des vibrations mécaniques en plusieurs endroits et remplir les mêmes fonctions que celui décrit dans le document EP-A-0 425 352. La figure 5 montre, à titre d'exemple supplémentaire, un dispositif destiné à amortir les vibrations sonores dans deux plages de fréquences, correspondant à deux fréquences de référence xₗ et xᵣ, à partir de signaux fournis par M capteurs 10₁, ..., 10_{M}, en mettant en oeuvre deux actionneurs 16ₐ et 16_{b} tels que des sources de contre-bruit. Dans ce cas chacun des filtres 14 de la figure 2 est remplacé par plusieurs modules, en nombre égal à celui des actionneurs, c'est-à-dire par deux modules affectés respectivement des références a et b dans le cas de deux actionneurs. Le dispositif de la figure 5 comporte en conséquence quatre modules 38ₐₗ, 38ₐᵣ, 38_{bl} et 38_{br}, dont seuls les deux premiers sont représentés complètement. Le module 38ₐₗ par exemple comporte encore un filtre numérique 14ₐₗ dont les coefficients sont ajustés par une boucle. Mais cette boucle comporte M branches, correspondant chacune à un des capteurs 10₁, 10₂, ..., 10_{M}. Les sorties des multiplieurs 20ₐₗ des trois branches sont sommées dans un additionneur 40ₐₗ et le résultat est appliqué au filtre 14ₐₗ. Enfin l'actionneur 16ₐₗ reçoit la somme des signaux de sortie des modules 38ₐₗ et 38ₐᵣ, formés dans un additionneur 42ₐ. Les filtres numériques seront en général purement transverses.

De même, l'actionneur 16_{b} reçoit la sortie d'un additionneur 42_{b} relié aux sorties des modules 38_{bl} et 38_{br}.

On voit qu'il y a parallélisation des circuits (ce terme devant être interprété comme couvrant le cas également d'une réalisation logicielle) pour les différents actionneurs ou sources de contre-vibration 16ₐ, 16_{b}, etc. Les signaux de sortie des capteurs sont communiqués à chacun des modules de calcul.

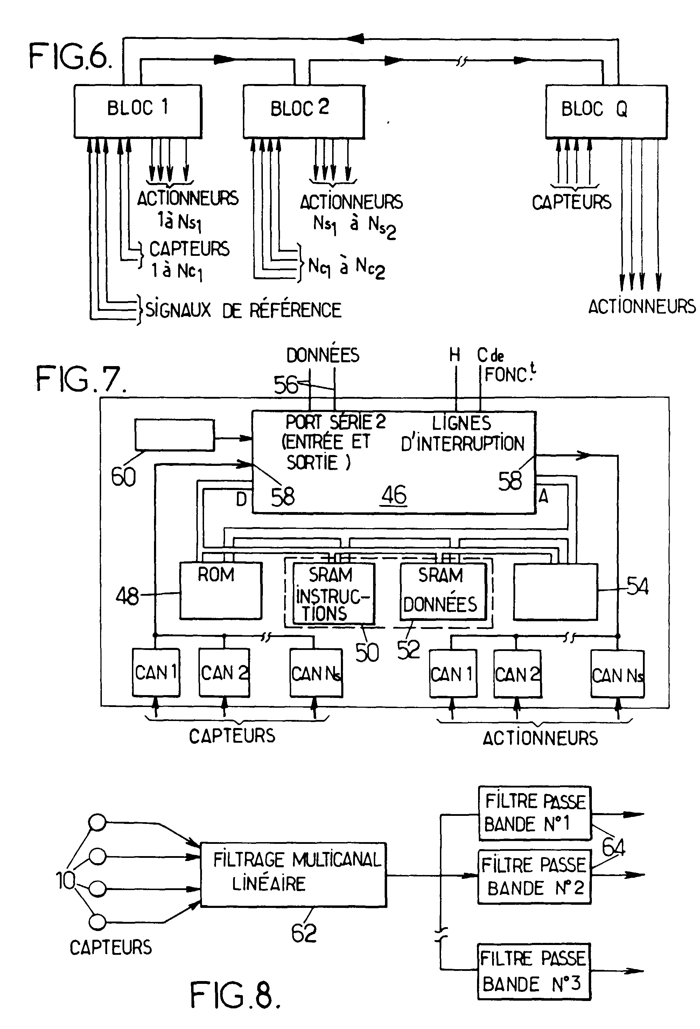

Une architecture matérielle possible du montage synoptique montré en figure 5 est illustré en figure 6. La disposition de principe montrée en figure 6 est comparable à celle de la figure 5, c'est-à-dire comporte des modules identiques placés en parallèle. Mais la répartition des fonctions est légèrement différente, de façon à optimiser le nombre de blocs de calcul et à faire la meilleure utilisation possible des ressources de calcul de chaque bloc. Pour cela, chaque bloc est prévu pour alimenter plusieurs actionneurs ou sources de contre-vibration et reçoit, pour chaque actionneur dont il a la charge, l'ensemble des signaux de référence susceptibles d'être utilisés.

Chacun des blocs 1 à Q montrés en figure 6 prend en charge les sorties analogiques correspondant aux actionneurs qu'il commande, par exemple 1 à Ns₁ à Ns₂ pour le bloc 2, le bloc Q traitant les derniers actionneurs. Les entrées analogiques provenant des capteurs sont réparties entre les blocs, par exemple 1 à Nc₁ pour le bloc 1, Nc₁ à Nc₂ pour le bloc 2, etc...

L'ensemble des informations d'entrée (signaux de référence et signaux des capteurs) peut être communiqué à l'ensemble des blocs de calcul par une liaison numérique 44. Les signaux analogiques de référence sont appliqués uniquement au bloc 1, puis distribués sur les autres blocs.

Les blocs peuvent être interfacés les uns aux autres par des liaisons série ou parallèle. Le choix sera fait selon que l'on privilégie la diminution du nombre de connexions ou la rapidité de calcul. Lorsque le dispositif est implanté sur un processeur existant, le choix des liaisons sera fait de façon à exploiter au maximum les liaisons d'origine du processeur, à l'intérieur de chaque bloc, pour ne pas trop compliquer la cartographie de mémoire.

Le dispositif comporte, en plus des liaisons indiquées sur la figure 6, des conducteurs de commande pour la plupart non représentés, permettant d'effectuer les interruptions, de distribuer un signal d'horloge, et de provoquer successivement les différentes phases de fonctionnement (phase préliminaire d'identification des caractéristiques du système, puis phase de contrôle actif d'amortissement proprement dit).

Les échanges de données entre les blocs peuvent s'effectuer par trames d'informations émises par chaque bloc à son tour vers tous les autres blocs. La trame comporte les échantillons des voies analogiques (signaux de sortie des capteurs) pris en charge par le bloc qui émet et des informations de service, identifiant par exemple les voies dont les données sont transmises, identifiant le bloc émetteur, indiquant l'état de bon fonctionnement.

Les algorithmes de filtrage et d'adaptation peuvent être exécutés soit en parallèle, soit à la suite de l'échange de données, suivant que le processeur utilisé a ou non une capacité de gestion transparente d'un mode d'accès direct en mémoire.

L'horloge (non-représentée) fixe la cadence d'exécution des tâches, la cadence d'acquisition des voies d'entrée analogiques et la cadence de restitution des sorties analogiques. Les convertisseurs numériques/analogiques et analogiques/numériques nécessaires n'ont pas été représentés sur les figures pour plus de simplicité. Chacun des blocs fonctionnels montrés en figure 6 peut avoir la constitution montrée en figure 7. Le bloc comporte des convertisseurs d'entrée CAN₁, ..., CAN_{Ne}, et des convertisseurs numériques-analogiques de sortie CNA₁, ..., CNA_{Ns}, par exemple du type σδ qui permet d'éviter la nécessité de filtre anti-repliement en entrée et de filtres de reconstruction en sortie. Seul le premier bloc est relié à l'horloge H du système. Le processeur 46 reçoit les signaux d'entrée provenant des capteurs et fournit les signaux de mise en oeuvre des actionneurs qui lui sont associés. Il est relié à une mémoire morte 48 qui contient tout le logiciel applicatif, susceptible d'être téléchargé dans des mémoires rapides d'instructions et de données, 50 et 52 (mémoires vives statiques par exemple) lors de l'initialisation du système. Une mémoire non-volatile 54 est avantageusement prévue pour conserver les paramètres identifiés sur le site d'exploitation du système, le contexte et les paramètres essentiels de l'algorithme de commande en cas de microcoupure de l'alimentation électrique.

Le processeur 46 comporte des accès série 56 de communication avec les autres blocs et 58 de liaison avec les convertisseurs. Un circuit 60 d'identification de bloc fournit au processeur 46, sur un accès parallèle, un mot d'identification de bloc qui peut être transféré aux autres blocs pour fournir une indication d'origine de signaux.

Avec des filtres numériques à fréquence d'échantillonnage asynchrone du signal de référence, les dispositifs montrés en figures 2 et 5 sont utilisables lorsque le phénomène vibratoire (bruit ou vibration d'une structure mécanique) à amortir comporte plusieurs pics à des fréquences n'ayant pas de plus petit commun diviseur.

La fonction de transfert fixe de chacun des filtres de boucle peut être déterminée en ligne une fois pour toute au cours d'une phase préliminaire utilisant par exemple une source de bruit étalon permettant de déterminer la fonction de transfert actionneur(s)-capteur(s). Référence peut être faite à ce sujet à l'article "Theoretical and experimental study of the convergence of MIMO CMS algorithms for use in active control of periodic noise" par G. Billoud et autres dans Rencontres Scientifiques du Cinquantenaire du LMA, Publications du LMA n° 127, ISSN 0750-0756, pages 31 à 47.

### Dispositif d'amortissement de vibrations périodiques à fréquence fondamentale rapidement variable dans une plage déterminée

Dans certains cas, la fréquence fondamentale de vibration et donc les fréquences harmoniques peuvent évoluer rapidement.

Le dispositif décrit ci-dessus est encore applicable, à condition que la fonction de transfert des filtres de boucle traitant les signaux de référence soit représentative de la fonction de transfert physique actionneur-capteur sur toute la plage de fréquence autour d'une fréquence nominale, n/T₀ pour la voie affectée à l'harmonique n. Le problème est alors beaucoup plus facile à résoudre que dans l'art antérieur du fait que chaque filtre n'a à traiter qu'une seule fréquence nominale.

A titre d'exemple de situation où ce cas peut se présenter, on peut citer le domaine automobile où les pics de puissance du bruit évoluent rapidement en fréquence lors du roulage.

### Dispositif d'amortissement de vibrations à des fréquences aléatoires

Les dispositifs décrits ci-dessus sont également applicables dans le cas de phénomène vibratoire où les pics de puissance sont à des fréquences aléatoires dans un domaine étendu. Dans ce cas, les différentes voies fréquentielles du dispositif sont constituées de façon que les signaux de référence appliqués aux différentes voies correspondent à des bandes différentes, mais adjacentes, telles que, considérés dans leur ensemble, les signaux de référence couvrent complètement le domaine de fréquence dans lequel peut se présenter la vibration à amortir.

La largeur de bande affectée à chaque voie sera choisie de façon que la fonction de transfert actionneur-capteur soit relativement homogène pour l'ensemble des fréquences de la bande et représentable par une fonction de transfert unique.

Du fait du caractère aléatoire des fréquences auxquelles est concentrée l'énergie à amortir, les signaux de référence affectés à chaque voie doivent être cohérents avec les signaux fournis par les capteurs physiques fournissant le signal représentatif de la vibration d'origine ou résiduelle. Cette condition est nécessaire du fait que l'amortissement met en oeuvre un algorithme linéaire.

Cette condition peut être remplie en élaborant les signaux de référence par un traitement linéaire, donc garantissant la cohérence, du signal fourni par un capteur ou de plusieurs signaux de capteurs physiques mesurant une grandeur cohérente avec les vibrations à amortir.

Dans le cas d'un dispositif à un seul capteur, et à condition qu'il fournisse un signal de sortie ayant un contenu harmonique suffisant, les différents signaux de référence peuvent être générés par un jeu de filtres passe-bande ayant une constitution comparable à celle des filtres 28₁,..., 28_{N} de la figure 3. Mais les filtres passe-bande doivent alors avoir des bandes passantes jointives.

Dans le cas d'un dispositif à plusieurs capteurs (figure 8), les signaux de sortie de tous ces capteurs peuvent être appliqués à un filtre linéaire multicanal 62, fournissant, aux filtres passe-bande 64, un signal complexe contenant l'ensemble des fréquences fournies par les différents capteurs. Le filtre multicanal 62 effectue une combinaison linéaire des signaux d'entrée provenant des capteurs 10, avec une pondération qui peut être déterminée expérimentalement de façon à équilibrer les différentes contributions.

## Revendications

1. Procédé d'amortissement actif de vibrations en au moins un emplacement déterminé soumis à un champ primaire de vibrations, suivant lequel on génère une onde vibratoire destinée à interférer avec le champ primaire audit emplacement, par filtrage adaptatif d'un signal de référence ; on mesure l'amplitude résiduelle de vibrations audit emplacement ; et on adapte automatiquement le filtrage pour tendre à annuler l'amplitude résiduelle ainsi mesurée,
caractérisé en ce qu'on fractionne le signal de référence (x) en plusieurs signaux individuels de référence sinusoïdaux (x₁, ... xₙ) comportant chacun une seule parmi plusieurs fréquences auxquelles le champ primaire présente une énergie notable, on soumet chaque signal individuel de référence à un filtrage numérique adaptatif propre et on génère l'onde vibratoire à partir de la somme des signaux individuels filtrés.

2. Procédé selon la revendication 1, caractérisé en ce que le filtrage numérique adaptatif est linéaire et en ce que les coefficients de convergence des différents filtres sont indépendamment adaptés.

3. Procédé selon la revendication 2, caractérisé en ce que l'on donne à chaque coefficient de convergence une valeur proportionnelle à l'inverse de la trace de la matrice d'autocorrélation des signaux filtrés, respectivement (x_{1f}, x_{2f}, ..., x_{nf}) correspondant aux différentes fréquences.

4. Procédé selon la revendication 1, 2 ou 3, caractérisé en ce qu'on effectue le filtrage numérique sans recherche de synchronisme entre l'échantillonnage des signaux individuels soumis au filtrage et le signal de référence correspondant.

5. Dispositif d'amortissement actif de vibrations en au moins un emplacement déterminé soumis à un champ primaire de vibrations, comprenant au moins un capteur placé audit emplacement et comprenant au moins un actionneur de génération d'une onde vibratoire destinée à interférer avec le champ primaire,
caractérisé en ce qu'il comprend un nombre n de voies de traitement ayant chacun un filtre numérique (14) d'alimentation de l'actionneur ou des actionneurs (16) alimenté par un signal sinusoïdal de fréquence propre au filtre et correspondant à une concentration d'énergie vibratoire du champ primaire, dont les coefficients sont adaptables par une boucle propre qui reçoit d'une part un signal d'erreur (e) fourni par le capteur ou les capteurs (10), d'autre part le signal d'entrée du filtre numérique, filtré par un filtre de boucle (18), et en ce que les sorties des voies sont additionnées et appliquées à l'actionneur ou aux actionneurs, chaque filtre de boucle ayant une fonction de transfert représentative de la fonction de transfert physique actionneur(s)-capteur(s).

6. Dispositif selon la revendication 5, caractérisé en ce que, le champ primaire étant constitué de vibrations périodiques, le signal sinusoïdal d'entrée de chaque voie est fourni par un ensemble comprenant un détecteur placé dans ledit environnement et fournissant un signal constitué d'impulsions à une fréquence au moins double de la fréquence la plus élevée à amortir et un synthétiseur ayant, pour chaque voie, une mémoire numérique contenant les échantillons des signaux sinusoïdaux à générer, et un compteur d'adressage des mémoires.

7. Dispositif selon la revendication 5, caractérisé en ce que le signal sinusoïdal est fourni à chaque voie par un détecteur fournissant des impulsions à une fréquence fondamentale, de durée telle que le signal du détecteur ait une énergie suffisante pour chacune des fréquences à amortir et plusieurs voies constituées chacune par un filtre passe-bande (38) à bande passante étroite.

8. Dispositif selon la revendication 5, comportant plusieurs capteurs placés à des emplacements différents et plusieurs actionneurs, caractérisé en ce que chaque filtre numérique (14) comporte plusieurs modules, en nombre égal à celui des actionneurs, ayant chacun une boucle propre, toutes les boucles d'un même module recevant le même signal de référence.

9. Dispositif selon la revendication 5 destiné à amortir un champ primaire de vibrations périodiques à fréquence fondamentale rapidement variable dans une plage limitée, caractérisé en ce que les dits filtres de boucle ont une fonction de transfert représentative de la fonction de transfert physique actionneur(s) -capteur(s) dans l'ensemble de la plage autour d'une fréquence nominale qui est n/T₀ pour la voie affectée à l'harmonique n de la période fondamentale T₀.

10. Dispositif selon la revendication 5 destiné à l'amortissement de vibrations à des fréquences aléatoires, caractérisé en ce que les différentes voies de traitement du dispositif sont constituées de façon que les signaux de référence appliqués aux différentes voies correspondent à des bandes adjacentes, telles que, considérés dans leur ensemble, les signaux de référence couvrent complètement le domaine de fréquence dans lequel peuvent se présenter les vibrations à amortir, la largeur de bande affectée à chaque voie étant choisie de façon que la fonction de transfert actionneur-capteur soit relativement homogène pour l'ensemble des fréquences de la bande et représentable par une fonction de transfert unique.

11. Dispositif selon la revendication 9, caractérisé en ce que les signaux de référence sont élaborés par un traitement linéaire du signal fourni par un capteur ou de plusieurs signaux de capteurs physiques mesurant une grandeur physique cohérente avec les vibrations à amortir et couvrant l'ensemble du domaine.

## Claims

1. A method for active damping of vibration at at least one predetermined location subjected to a primary vibration field, comprising generating avibratory wave for interfering with the primary field at said location, by adaptive filtering of a reference signal; measuring the residual value of vibrations at said location; and automatically adapting filtering for cancelling the so-measured residual value,
characterized by splitting the reference signal (x) into a plurality of substantially sine-shaped individual reference signals (x₁ ..., xₙ) each comprising only one among a plurality of harmonic frequencies at which the primary field has a significant energy, subjecting each individual signal to a separate adaptive digital filtering and generating the vibratory wave from the sum of the individual filtered signals.

2. Method according to claim 1, characterized in that the adaptive digital filtering is linear and the convergence coefficients of the different filters are independently adapted.

3. Method according to claim 2, characterized by selecting a value of each convergence coefficient which is in reverse relation with the trace of the autocorrelation matrix of the filtered signals, respectively (x_{1f}, x_{2f}, ..., x_{nf}) corresponding to the different frequencies.

4. Method according to claim 1, 2 or 3, characterized in that the digital filtering is carried out without attempt for synchronism between samples of the individual signals subjected to filtering and the respective reference signal.

5. Apparatus for active vibration damping at at least a predetermined location subjected to a primary vibration field comprising at least one sensor located at said location and comprising at least one actuator for generating a vibratory wave for interfering with the primary field,
characterized in that it comprises a plurality n of processing paths each having a digital filter (14) for driving the actuator or actuators (16), fed by a sine-shaped signal having a frequency which is specific to the filter and corresponds to a peak of vibratory energy of the primary field, whose coefficients are adaptable by a specific loop which receives, on the one hand, an error signal (e) delivered by the sensor or sensors (10), on the other hand the input signal of the digital filter, filtered by a loop filter (18), and in that the outputs of the paths are added and fed to the actuator or actuators, each loop filter having a transfer function which is representative of the physical actuator(s)-sensor(s) transfer function.

6. Apparatus according to claim 5, characterized in that -the primary field consisting of periodical vibrations- the sine-shaped input signal of each path is delivered by a unit comprising a detector located in said environment and delivering a signal consisting of pulses at a frequency at least twice the highest frequency to be damped and a synthetizer having, for each path, a digital memory containing samples of the sine-shape signals to be generated, and a counter for addressing the memories.

7. Apparatus according to claim 5, characterized in that the sine-shaped signal is delivered to each path by a detector providing pulses at a fundamental frequency, of such duration that the detector signal has a sufficient amount of energy for each frequency to be damped and a plurality of paths each consisting of a band-pass filter (38) having a narrow pass-band.

8. Device according to claim 5, comprising a plurality of sensors located at different locations and a plurality of actuators, characterized in that each digital filter (14) has a plurality of modules equal in number to said actuators, each having its own, all loops of a same module receiving the same sine-shaped signal.

9. Apparatus according to claim 5, for damping a primary field of vibrations which are periodical at a fundamental frequency which exhibits fast variations, within a predetermined limited range, characterized in that said loop filters have a transfer function which is representative of the physical actuator(s)-sensor(s) transfer function within the whole of said range about a set frequency which is n/T₀ for that path which is dedicated to the nth harmonic of the fundamental period T₀.

10. Apparatus according to claim 5, for damping vibrations at randomly varying frequencies, characterized in that the different paths are arranged for the reference signals applied to very different paths correspond to mutually adjacent frequency bands so selected that, considered as a whole, the reference signals completely cover the frequency field within vibrations to be damped may occur, the band width assigned to each path being selected for the actuator-sensor transfer function to be substantially homogeneous for all frequencies in the band and apt to be represented by a single-transfer function.

11. Apparatus according to claim 9, characterized in that the reference signals are generated by linear processing of the signal delivered by a sensor or of a plurality of signals originating from physical sensors measuring a physical parameter which is coherent with the vibrations to be damped and covering the whole of the field.

## Patentansprüche

1. Verfahren zur aktiven Dämpfung von Schwingungen an wenigstens einer bestimmten Stelle, die einem primären Vibrationsfeld ausgesetzt ist, gemäß welchem eine Vibrationswelle durch adaptive Filterung eines Referenzsignals erzeugt wird, die dazu bestimmt ist, mit dem primären Vibrationsfeld an der Stelle zu interferieren; die Restamplitude der Vibrationen an der Stelle gemessen wird; automatisch die Filterung angepaßt wird, damit sie tendenziell die derart gemessene Restamplitude auslöscht, **dadurch gekennzeichnet, daß** das Referenzsignal (X) in mehrere einzelne sinusfürmige Referenzsignale (X₁,...,Xₙ) zerlegt wird, wobei jedes eine einzige unter mehreren Frequenzen aufweist, bei welcher das primäre Feld eine nennenswerte Energie darstellt, jedes einzelne Referenzsignal einer passenden adaptiven numerischen Filterung unterzogen wird und die Vibrationswelle anhand der Summe der einzelnen gefilterten Signale erzeugt wird.

2. Verfahren nach Anspruch 1, **dadurch gekennzeichnet, daß** die adaptive numerische Filterung linear ist und daß die Konvergenzkoeffizienten der unterschiedlichen Filter unabhängig adaptiert sind.

3. Verfahren nach Anspruch 2, **dadurch gekennzeichnet, daß** jeder Konvergenzkoeffizient einen Wert proportional zum Inversen der Spur der Autokorrelationsmatrix der gefilterten Signale aufweist, wobei (X_{1f}, X_{2f},-,X_{nf}) jeweils den unterschiedlichen Frequenzen entsprechen.

4. Verfahren nach Anspruch 1, 2 oder 3, **dadurch gekennzeichnet, daß** die numerische Filterung ohne die Suche nach Synchronismus zwischen der Abtastung der einzelnen Signale, die der Filterung unterliegen, und dem entsprechenden Referenzsignal durchgeführt wird.

5. Vorrichtung zur aktiven Dämpfung von Vibrationen an wenigstens einer vorbestimmten Stelle, die in einem primären Vibrationsfeld liegt, welche umfaßt: wenigstens einen Sensor, der sich an der Stelle befindet, und wenigstens eine Betätigungseinrichtung zur Erzeugung einer Vibrationswelle, die dazu bestimmt ist, mit dem primären Feld zu interferieren, **dadurch gekennzeichnet,** daß sie eine Anzahl n von Verarbeitungskanälen umfaßt, wobei jeder einen numerischen Filter (14) zur Versorgung der Betätigungseinrichtung oder der Betätigungseinrichtungen (16) aufweist, der durch ein sinusförmiges Signal mit Eigenfrequenz des Filters und welches einer Vibrationsenergiekonzentration des primären Felds entspricht, versorgt wird, dessen Koeffizienten in einer eigenen Schleife adaptierbar sind, die einerseits ein Fehlersignal (e), das durch den Sensor oder die Sensoren (10) geliefert wird, und andererseits das durch einen Filter (18) der Schleife gefilterte Eingangssignal des numerischen Filters erhält und **dadurch daß** die Kanalausgänge zusammengezählt und an die Betätigungseinrichtung oder die Betätigungseinrichtungen angelegt werden, wobei jeder Filter der Schleife eine Übertragungsfunktion aufweist, die die physikalische Übertragungsfunktion von Betätigungseinrichtung(en)-Sensor(en) darstellt.

6. Vorrichtung nach Anspruch 5, **dadurch gekennzeichnet, daß** bei der Zusammensetzung des primären Vibrationsfelds aus periodischen Vibrationen das sinusförmige Eingangssignal jedes Kanals von einer Anordnung geliefert wird, die umfaßt: einen Detektor, der in der genannten Umgebung angeordnet ist und der ein Signal liefert, das aus Impulsen mit einer Frequenz von wenigstens dem Doppelten der höchsten zu dämpfenden Frequenz liefert, und einen Synthesizer, der für jeden Kanal einen numerischen Speicher aufweist, der die Abtastungen der zu erzeugenden sinusförmigen Signale enthält, und einen Zähler zur Adressierung der Speicher.

7. Vorrichtung nach Anspruch 5, **dadurch gekennzeichnet, daß** das sinusförmige Signal für jeden Kanal durch einen Detektor geliefert wird, der Impulse mit einer Grundfrequenz mit einer solchen Dauer liefert, daß das Signal des Detektors eine ausreichende Energie für jede der zu dämpfenden Frequenzen und daß mehrere Kanäle aus einem Bandpaßfilter (38) mit einem schmalen Bandpaß gebildet sind.

8. Vorrichtung nach Anspruch 5, die umfaßt: mehrere Sensoren, die an unterschiedlichen Stellen angeordnet sind, und mehrere Betätigungseinrichtungen, **dadurch gekennzeichnet, daß** jeder numerische Filter (14) mehrere Module umfäßt, deren Anzahl gleich der Anzahl der Betätigungseinrichtungen ist, wobei jedes eine passende Schleife umfaßt, und jede Schleife eines selben Moduls das gleiche Referenzsignal empfängt.

9. Vorrichtung nach Anspruch 5 zur Dämpfung eines primären Felds von periodischen Vibrationen mit einer Grundfrequenz, die schnell in einem begrenzten Bereich variabel ist, **dadurch gekennzeichnet, daß** die Filter der Schleife eine Übertragungsfunktion haben, die die physikalische Übertragunsfunktion von Auslöseeinrichtung(en)-Sensor(en) im gesamten Bereich um eine nominale Frequenz darstellt, die n/T₀ für das Band ist, das für die Oberschwingung n mit der Grundperiode T₀ bestimmt ist.

10. Vorrichtung nach Anspruch 5 zur Dämpfung von Vibrationen mit zufälligen Frequenzen, **dadurch gekennzeichnet, daß** die unterschiedlichen Kanäle auf eine Art und Weise gebildet sind, daß die auf die unterschiedlichen Kanäle angewandten Referenzsignale, die angrenzenden Bändern entsprechen, derart sind, daß, in ihrer Gesamtheit betrachtet, die Referenzsignale vollkommen den Frequenzbereich überdecken, in den sie sich als die zu dämpfenden Vibrationen darstellen können, wobei die Breite des Bands, die für jedes Band bestimmt ist, derart gewählt ist, daß die Übertragungsfunktion von Auslöseeinrichtung-Sensor für die Gesamtheit der Frequenzen des Bands relativ homogen ist und durch eine einzige Übertragungsfunktion darstellbar ist.

11. Vorrichtung nach Anspruch 9, **dadurch gekennzeichnet, daß** die Referenzsignale durch eine lineare Verarbeitung von einem durch einen Sensor gelieferten Signal oder von mehreren Signalen von physikalischen Sensoren verarbeitet wird, wobei die Sensoren eine physikalische Größe messen, die mit den zu dämpfenden Vibrationen kohärent ist und den gesamten Bereich abdeckt.
